# EUROPÄISCHE PATENTSCHRIFT

(11) **EP 0 677 486 B1**
(45) Veröffentlichungstag und Bekanntmachung des Hinweises auf die Patenterteilung: **20.10.1999**
(21) Anmeldenummer: 95105483.2
(22) Anmeldetag: 12.04.1995
(51) Int. Cl.: C03B 23/03, C03B 35/20

(54) **Transfervorrichtung für gebogene Glasscheiben**
Apparatus for transporting bent glass sheets
Dispositif de transfert de feuilles de verre bombées

(30) Priorität: 15.04.1994 DE 4412748
(43) Veröffentlichungstag der Anmeldung: 18.10.1995
(73) Patentinhaber: FLACHGLAS AKTIENGESELLSCHAFT, 90766 Fürth (DE)
(72) Erfinder: Funk, Dieter, Dipl.-Ing., D-29379 Witten (DE); Bruns, Dieter, Dipl.-Ing., D-47495 Rheinberg (DE); Wenning, Rolf, Dipl.-Ing., D-46397 Bocholt (DE); Brans, Walter, Dipl.-Ing., D-45569 Recklinghausen (DE); Pilz, Joachim, Dipl.-Ing., D-45884 Gelsenkirchen (DE)
(74) Vertreter: Honke, Manfred, Dr.-Ing.

(56) Entgegenhaltungen:
- EP-A- 0 121 258
- WO-A-90/11973
- US-A- 4 185 986
- US-A- 4 187 095

## Beschreibung

Die Erfindung betrifft eine Transfervorrichtung für gebogene Glasscheiben im Zuge der automatischen Fertigung von Kraftfahrzeugglasscheiben in einer Fertigungsstraße mit Durchlaufofen für die Erwärmung der zu biegenden Glasscheiben auf Biegetemperatur, Biegepresse mit im Pressengestell eingerichteter Biegepatrize und Biegematrize, wobei die Biegepatrize und/oder die Biegematrize heb- und senkbar ist, in der die erwärmten Glasscheiben nacheinander liegend nach Maßgabe einer vorgegebenen Sollgeometrie abgebogen werden, Vorspannstation für die Kühlung der fertiggebogenen Glasscheiben und Einrichtung zur Weitergabe der gekühlten Glasscheiben, wobei die Transfervorrichtung zwischen Biegepresse und Vorspannstation arbeitet.

Fertigungsstraßen des beschriebenen Aufbaus und der beschriebenen Funktion sind in der Praxis in verschiedenen Ausführungsformen bekannt. Zumindest die Biegepresse und die Vorspannstation arbeiten taktweise. Solche Fertigungsstraßen müssen in der modernen Technik einigen grundsätzlichen Forderungen genügen, nämlich einerseits mit hoher Leistung und damit kurzen Taktzeiten arbeiten, andererseits Produkte, d. h. gebogene Glasscheiben, liefern, die in bezug auf die Fertigungsgenauigkeit enge und extreme Toleranzen einhalten. Sie müßten darüber hinaus kurzfristig und einfach auf unterschiedliche Glasscheiben und/oder unterschiedliche Biegegeometrien eingerichtet werden können, wenn losweise und häufig auch bei verhältnismäßig kleinen Losgrößen unterschiedliche Glasscheiben unterschiedlich gebogen werden müssen.

Bei der bekannten Fertigungsstraße, der die Transfervorrichtung angehört, von der die Erfindung ausgeht (WO-A1-90/11973), ist die Transfervorrichtung eine Shuttletransfervorrichtung, deren Shuttle im Stationsgestell geführt ist. Dazu sind als Shuttleaufnahme Aufnahmeholme vorgesehen, an die der Shuttle angeschlossen ist. Die Aufnahmeholme sind an Holmführungen des Stationsgestells verfahrbar gelagert und mit dem Shuttle in das Pressengestell der Biegepresse frei vorkragend einfahrbar. Das hat sich bewährt, ist jedoch verbesserungsfähig, wenn kurze Taktzeiten, in bezug auf die gebogenen Glasscheiben hohe Genauigkeiten, verlangt werden und außerdem sicherzustellen ist, daß auch bei extrem kurzen Taktzeiten an den gebogenen Glasscheiben vibrationsbedingte und aus hohen Kräften aus positiver oder negativer Beschleunigung resultierende Verformungsfehler nicht auftreten.

Im übrigen wird beim Transport von gebogenen Glasscheiben auf eine Tranfervorrichtung mit Schienen zurückgegriffen. Primär geht es hier darum, eine eindeutig festgelegte Biegung der Glasscheibe zu gewährleisten (vgl. EP-A-0 121 258).

Der Erfindung liegt das technische Problem zugrunde, eine Transfervorrichtung der vorstehend beschriebenen Zweckbestimmung so weiter auszubilden, daß auch bei extrem kurzen Taktzeiten mit hoher Präzision und fehlerfrei gebogene Glasscheiben produziert werden. Darüber hinaus soll die Transfervorrichtung leicht und schnell auf die Herstellung unterschiedlicher Produkte umstellbar sein.

Zur Lösung dieser Aufgabe ist Gegenstand der Erfindung eine Transfervorrichtung für gebogene Glasscheiben im Zuge der automatischen Fertigung von Kraftfahrzeugglasscheiben in einer Fertigungsstraße mit
Durchlaufofen für die Erwärmung der zu biegenden Glasscheiben auf Biegetemperatur,
Biegepresse mit im Pressengestell eingerichteter Biegepatrize und Biegematrize, wobei die Biegepatrize und/oder die Biegematrize heb- und senkbar ist, in der die erwärmten Glasscheiben nacheinander liegend nach Maßgabe einer vorgegebenen Sollgeometrie gebogen werden,
Vorspannstation für die Kühlung der fertiggebogenen Glasscheiben und
Einrichtung zur Weitergabe der gekühlten Glasscheiben,
wobei die Transfervorrichtung zwischen Biegepresse und Vorspannstation arbeitet und die Kombination der folgenden Merkmale verwirklicht ist:
a) Die Transfervorrichtung ist eine Shuttle-Transfervorrichtung, deren Shuttle an seinen in Verfahrrichtung weisenden Seiten an Shuttleführungsschienen geführt ist,
b) die Shuttleführungsschienen sind einerseits am Pressengestell der Biegepresse, andererseits am Stationsgestell der Vorspannstation statisch als Balken auf zwei Auflagern oder als Durchlaufträger gelagert,
c) ferner sind zumindest die Bereiche der Shuttleführungsschienen, die in das Pressengestell der Biegepresse hineinragen, zum Zwecke der Durchführung von Wartungs- und/oder Umrüstarbeiten an der Biegepresse entfernbar, wobei dazu die Shuttleführungsschienen alternativ als starre Schienen ausgeführt und horizontal aus dem Pressengestell herausfahrbar und in dieses hereinfahrbar sind oder ein Abklappgelenk aufweisen, wobei die in das Pressengestell hineinragenden Bereiche der Shuttleführungsschienen aus diesem herausklappbar sind,
d) der Shuttle weist einen Shuttlerahmen sowie einen darin gelagerten Shuttlering auf und der Shuttlerahmen ist über eine an den Shuttleführungsschienen verfahrbare Shuttlerahmenaufnahme an den Shuttleführungsschienen geführt,
e) der Shuttlering ist gegenüber der Shuttlerahmenaufnahme und damit in bezug auf die Biegepatrize justierbar,
f) der Shuttlering weist randseitig Positioniereinrichtungen für die aufgenommenen Glasscheiben auf.

Die Erfindung geht von der Erkenntnis aus, daß bei einer Transfervorrichtung, die in das Pressengestell vorkragende und in der beschriebenen Weise bewegte Aufnahmeholme für den Shuttle aufweist, störende Vibrationen dann unvermeidbar sind, wenn mit hohen Taktzeiten gearbeitet werden muß. Solche Vibrationen treten nicht auf, wenn mit zusätzlichen Shuttleführungsschienen gearbeitet wird, die als Balken auf zwei Auflagern oder Durchlaufträger statisch eingerichtet sind. Hinzu kommen muß jedoch eine genaue Positionierung des Shuttleringes in bezug auf die Biegepatrize und hinzu kommen müssen fernerhin Maßnahmen, die die Beschleunigungskräfte, die auf die noch weiche, gebogene und von dem Shuttle aufgenommene Glasscheibe einwirken, gleichsam neutralisieren. Das alles geschieht durch die Kombination der Merkmale a) bis f), wobei ohne Schwierigkeiten auch eine Anpassung an unterschiedliche Betriebsbedingungen möglich ist, weil zumindest die Bereiche der Shuttleführungsschienen, die in das Pressengestell der Biegepresse hineinragen, zum Zwecke der Durchführung von Wartungs- und Umrüstarbeiten aus der Biegepresse entfernbar sind. Im Ergebnis werden gebogene Glasscheiben produziert, die der vorgegebenen Sollgeometrie mit sehr engen Toleranzen entsprechen und aus Beschleunigungskräften oder Vibrationen resultierende Fehler nicht aufweisen.

Im einzelnen bestehen im Rahmen der Erfindung mehrere Möglichkeiten der weiteren Ausbildung und Gestaltung. Zweckmäßigerweise weist die Biegepatrize eine Vakuum-Fixiereinrichtung zum Festhalten bzw. Fixieren einer Glasscheibe für die Übergabe an den Shuttle auf. Zur Anpassung an unterschiedliche betriebliche Verhältnisse, z. B. zur Anpassung an Biegematrizen unterschiedlicher Geometrie, können die Shuttleführungsschienen am Pressengestell sowie am Stationsgestell höhenverstellbar gelagert sein und dadurch auf unterschiedliche Biegepatrizen bzw. unterschiedlich eingerichtete Biegepatrizen einstellbar sein. Die Shuttlerahmenaufnahme kann auf verschiedene Weise ausgebildet sein. Sie besteht vorzugsweise aus an den Shuttleführungsschienen verfahrbaren oder verschiebbaren Aufnahmeholmen. Der Shuttlering wird zweckmäßigerweise mit Lagerpratzen an den Shuttlerahmen angeschlossen. Auch insoweit können Einstellfreiheitsgrade verwirklicht werden. Um den Shuttlerahmen und damit den Shuttlering einzurichten, genügt es im einfachsten Falle, daß der Shuttlerahmen in Verfahrrichtung einerseits unverstellbar und andererseits justierbar an die Shuttlerahmenaufnahme angeschlossen ist. Das kann z. B. mit justierbaren Verschraubungen geschehen. Die vorzugsweise als Positionierklemmeinrichtungen ausgeführten Positioniereinrichtungen führen erfahrungsgemäß dann nicht zu störenden Markierungen an den noch weichen Glasscheiben, wenn sie auf die Randschnittfläche der gebogenen Glasscheiben einwirken. Dazu können die Positionierklemmeinrichtungen Drehzylinder und Klemmhebel oder Klemmexzenter aufweisen, die gegen die Randschnittflächen der Glasscheiben wirken.

Das Ein- und Ausfahren der nach einer ersten Alternative als starre Schienen ausgeführten Shuttleführungsschienen wird verwirklicht, wenn die Biegepresse aus irgendwelchen Gründen beispielsweise zum Zwecke des Austausches der Biegepatrize und Biegematrize umzurüsten ist. Zum gleichen Zweck ist nach der zweiten Alternative vorgesehen, daß die Shuttleführungsschienen ein Abklappgelenk aufweisen. Der Shuttlering ist zweckmäßigerweise als ein starres Bauteil ausgeführt. Das bedeutet, daß bei Änderungen der Biegegeometrie der Shuttlering ausgetauscht werden muß. Das ist bei der erfindungsgemäßen Ausführungsform ohne Schwierigkeiten möglich.

Ist eine erfindungsgemäße Transfervorrichtung in eine automatische Fertigung von Kraftfahrzeugglasscheiben in eine Fertigungsstraße eingebaut und integriert, so erfolgt die Steuerung der verschiedenen Bauteile der erfindungsgemäßen Transfervorrichtung mit den Hilfsmitteln der modernen Antriebs- und Steuerungstechnik ohne Schwierigkeiten, insbesondere auch mit einer Rechnersteuerung des gesamten Fertigungsprogramms.

Im folgenden wird die Erfindung anhand einer lediglich ein Ausführungsbeispiel darstellenden Zeichnung ausführlicher erläutert. Es zeigen
- Fig. 1: die Seitenansicht einer erfindungsgemäßen Transfervorrichtung,
- Fig. 2: im gegenüber der Fig. 1 wesentlich vergrößerten Maßstab perspektivisch den Shuttlerahmen mit Shuttlering aus dem Gegenstand der Fig. 1,
- Fig. 3: im gegenüber der Fig. 2 vergrößerten Maßstab den Shuttlering aus dem Gegenstand der Fig. 2 und
- Fig. 4: in einer Draufsicht auf den Gegenstand nach Fig. 3 Einzelheiten einer als Positionierklemmeinrichtung ausgeführten Positioniereinrichtung an dem Shuttlering der Fig. 3,
- Fig. 5: den Gegenstand nach Fig. 4 in anderer Funktionsstellung.

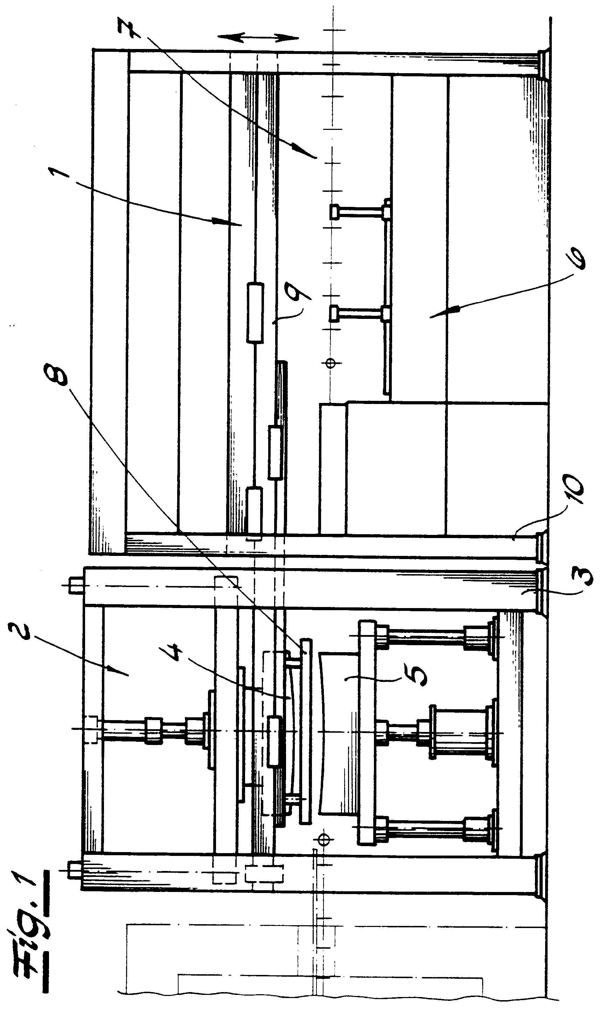

Die in den Figuren dargestellte Transfervorrichtung 1 für gebogene Glasscheiben ist zur Integration in die automatische Fertigung von Kraftfahrzeugglasscheiben bestimmt. Die Fertigungsstraße insgesamt wurde nicht gezeichnet. Insoweit wird zur Vermeidung von Wiederholungen auf den eingangs behandelten Stand der Technik (WO-A1-90/11973) verwiesen. Man erkennt in der Fig. 1 die Biegepresse 2 mit dem Pressengestell 3, heb- und senkbarer Biegepatrize 4 und heb- und senkbarer Biegematrize 5, wobei in dieser Biegepresse 2 die zuvor in einem Durchlaufofen erwärmten Glasscheiben nacheinander liegend nach Maßgabe einer vorgegebenen Sollgeometrie gebogen werden. Nach rechts schließt eine Vorspannstation 6 für die Vorspannung der fertiggebogenen Glasscheiben an, die ihrerseits auf eine Einrichtung 7 zur Weitergabe der vorgespannten Glasscheiben arbeitet. Die Transfervorrichtung 1 arbeitet zwischen Biegepresse 2 und Vorspannstation 6.

Die Transfervorrichtung 1 ist eine Shuttletransfervorrichtung, deren Shuttle 8 an seinen in Transportrichtung verlaufenden Seiten an Shuttleführungsschienen 9 geführt ist. Die Shuttleführungsschienen 9 sind einerseits am Pressengestell 3 der Biegepresse 2, andererseits am Stationsgestell 10 der Vorspannstation 6 statisch als Balken auf zwei Auflagern oder als Durchlaufträger gelagert.

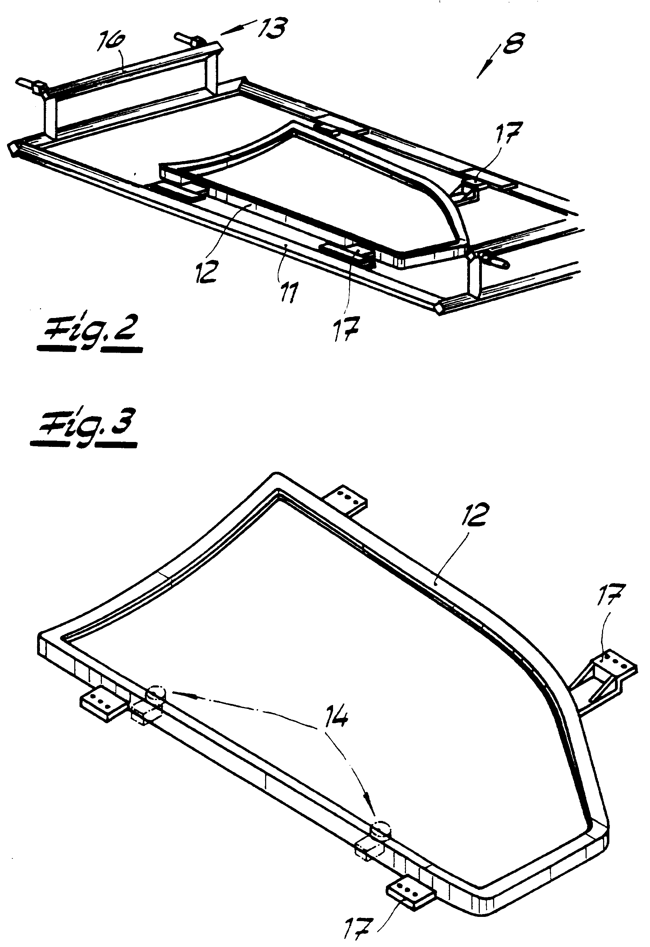

Aus einer vergleichenden Betrachtung der Fig. 2 und 3 entnimmt man, daß der Shuttle 8 einen Shuttlerahmen 11 sowie einen darin gelagerten Shuttlering 12 aufweist. Der Shuttlerahmen 11 ist über eine an den Shuttleführungsschienen 9 verfahrbare Shuttlerahmenaufnahme 13 an den Shuttleführungsschienen 9 geführt. Der Shuttlering 12 ist gegenüber der Shuttlerahmenaufnahme 13 und damit in bezug auf die Biegepatrize 4 justierbar. Der Shuttlering 12 weist randseitig automatische betätigbare Positionierklemmeinrichtungen 14 für die aufgenommenen Glasscheiben auf. Zumindest die Bereiche der Shuttleführungsschienen 9, die in das Pressengestell 3 der Biegepresse 2 hineinragen, sind zum Zwecke der Durchführung von Wartungs- und/oder Umrüstungsarbeiten an der Biegepresse 2 entfernbar.

In der Fig. 1 deuten Pfeile an, daß die Shuttleführungsschienen 9 am Pressengestell 3 sowie am Stationsgestell 10 höheneinstellbar gelagert sind. Sie sind dadurch auf unterschiedliche Biegematrizen 5 bzw. unterschiedlich eingerichtete Biegepatrizen 4 einstellbar. Im Ausführungsbeispiel und nach bevorzugter Ausführungsform der Erfindung ist die Shuttlerahmenaufnahme 13 aus an den Shuttleführungsschienen 9 verfahrbaren Aufnahmeholmen 16 aufgebaut. Verfahrbar meint auch eine Ausführungsform, bei der nicht mit Rollen gearbeitet wird, sondern ein schlittenartiges Verfahren stattfindet.

Aus den Fig. 2 und 3 entnimmt man auch, daß der Shuttlering 12 mit Lagerpratzen 17 an den Shuttlerahmen 11 angeschlossen ist. Diese Lagerpratzen 17 könnten ihrerseits einstellbar sein, was nicht gezeichnet wurde.

Der Shuttlerahmen 11 ist einerseits unverstellbar und andererseits justierbar an die Shuttlerahmenaufnahmen 13 angeschlossen. Die Verstellung kann über entsprechende Stelltriebe, Exzenter oder dergleichen erfolgen.

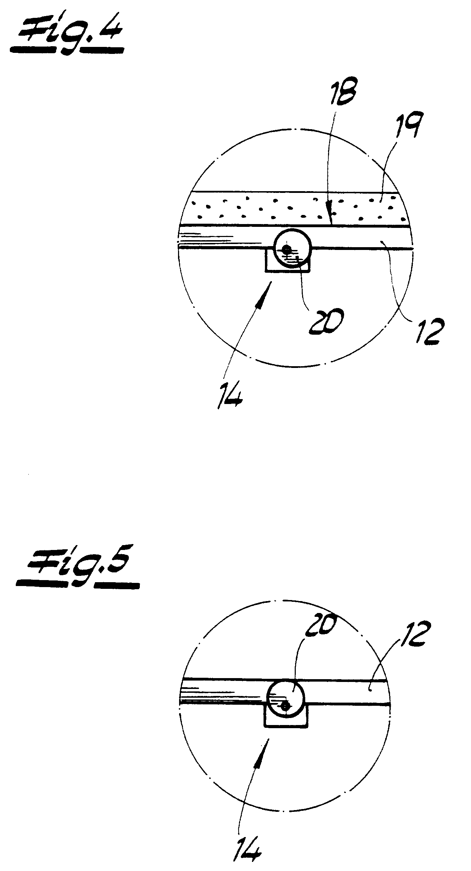

Aus einer vergleichenden Betrachtung der Fig. 3 bis 5 entnimmt man, daß die Positionierklemmeinrichtungen 14 auf die Randschnittflächen 18 der Glasscheiben 19 einwirken. Im Ausführungsbeispiel sind die Positionierklemmeinrichtungen Drehzylinder mit Klemmhebel oder Exzentern 20. Es versteht sich, daß sie eine Fernbetätigung zulassen.

Die Fig. 1 deutet an, daß die Shuttleführungsschienen 9 als starre Schienen ausgeführt sind. Sie sind horizontal in das Pressengestell 3 hineinfahrbar und herausfahrbar und wie dargestellt im Pressengestell 3 sowie im Stationsgestell 10 auflagerbar. Die Shuttleführungsschienen 9 könnten aber auch ein Abklappgelenk aufweisen, und die in das Pressengestell 3 hineinragenden Bereiche der Shuttleführungsschienen 9 könnten aus dem Pressengestell 3 herausklappbar sein. Der Shuttlering 12 ist als ein starres Bauteil ausgeführt, er muß ausgetauscht werden, wenn es sich um das Biegen von unterschiedlichen Glasscheiben handelt, die nach unterschiedlicher Sollgeometrie zu biegen sind. - Die Ausrichtung und Justierung des Shuttleringes 12 unter Anpassung an die Biegepatrize 4 kann mit einer Hilfsvorrichtung auf einfache Weise sehr genau durchgeführt.

## Patentansprüche

1. Transfervorrichtung (1) für gebogene Glasscheiben im Zuge der automatischen Fertigung von Kraftfahrzeugglasscheiben in einer Fertigungsstraße, mit
Durchlaufofen für die Erwärmung der zu biegenden Glasscheiben auf Biegetemperatur,
Biegepresse (2) mit im Pressengestell (3) eingerichteter Biegepatrize (4) und Biegematrize (5), wobei die Biegepatrize (4) und/oder die Biegematrize (5) heb- und senkbar sind, in der die erwärmten Glasscheiben nacheinander liegend nach Maßgabe einer vorgegebenen Sollgeometrie gebogen werden,
Vorspannstation (6) für die Kühlung der fertiggebogenen Glasscheiben und
Einrichtung (7) zur Weitergabe der gekühlten Glasscheiben,
wobei die Transfervorrichtung (1) zwischen Biegepresse (2) und Vorspannstation (6) arbeitet und die Kombination der folgenden Merkmale verwirklicht ist:
a) Die Transfervorrichtung (1) ist eine Shuttle-Transfervorrichtung, deren Shuttle (8) an seinen in Verfahrrichtung weisenden Seiten an Shuttleführungsschienen (9) geführt ist,
b) die Shuttleführungsschienen (9) sind einerseits am Pressengestell (3) der Biegepresse (2), andererseits am Stationsgestell (10) der Vorspannstation (6) statisch als Balken auf zwei Auflagern oder als Durchlaufträger gelagert,
c) ferner sind zumindest die Bereiche der Shuttleführungsschienen (9), die in das Pressengestell (3) der Biegepresse (2) hineinragen, zum Zwecke der Durchführung von Wartungs- und/oder Umrüstarbeiten an der Biegepresse (2) entfernbar, wobei dazu die Shuttleführungsschienen (9) alternativ als starre Schienen ausgeführt und horizontal aus dem Pressengestell (3) herausfahrbar und in dieses hereinfahrbar sind oder ein Abklappgelenk aufweisen, wobei die in das Pressengestell (3) hineinragenden Bereiche der Shuttleführungsschienen (9) aus diesem herausklappbar sind,
d) der Shuttle (8) weist einen Shuttlerahmen (11) sowie einen darin gelagerten Shuttlering (12) auf und der Shuttlerahmen (11) ist über eine an den Shuttleführungsschienen (9) verfahrbare Shuttlerahmenaufnahme (13) an den Shuttleführungsschienen (9) geführt,
e) der Shuttlering (12) ist gegenüber der Shuttlerahmenaufnahme (13) und damit in bezug auf die Biegepatrize (4) justierbar,
f) der Shuttlering (12) weist randseitig Positioniereinrichtungen (14) für die aufgenommenen Glasscheiben auf.

2. Transfervorrichtung (1) nach Anspruch 1, dadurch gekennzeichnet, daß die Shuttleführungsschienen (9) am Pressengestell (3) sowie am Stationsgestell (10) höheneinstellbar gelagert sind.

3. Transfervorrichtung (1) nach Anspruch 1 oder 2, dadurch gekennzeichnet, daß die Shuttlerahmenaufnahme (13) aus an den Shuttleführungsschienen (9) verfahrbaren Aufnahmeholmen (16) aufgebaut ist.

4. Transfervorrichtung (1) nach einem der Ansprüche 1 bis 3, dadurch gekennzeichnet, daß der Shuttlering (12) mit Lagerpratzen (17) an den Shuttlerahmen (11) angeschlossen ist.

5. Transfervorrichtung (1) nach einem der Ansprüche 1 bis 4, dadurch gekennzeichnet, daß der Shuttlerahmen (11) in Verfahrrichtung einerseits unverstellbar und andererseits justierbar an die Shuttlerahmenaufnahme (13) angeschlossen ist.

6. Transfervorrichtung (1) nach einem der Ansprüche 1 bis 5, dadurch gekennzeichnet, daß die Positioniereinrichtungen (14) automatisch betätigte Positionierklemmeinrichtungen (14) sind, die auf die Randschnittflächen (18) der Glasscheiben (19) einwirken.

7. Transfervorrichtung (1) nach Anspruch 6, dadurch gekennzeichnet, daß die Positionierklemmeinrichtungen (14) Drehzylinder und Klemmhebel oder Klemmexzenter (20) aufweisen.

8. Transfervorrichtung (1) nach einem der Ansprüche 1 bis 7, dadurch gekennzeichnet, daß der Shuttlering (12) als starres Bauteil ausgeführt ist.

## Claims

1. Transfer device (1) for bent glass sheets during the course of automated production of motor vehicle glass windows on a production line with
continuous furnace for heating the glass sheets to be bent to bending temperature,
bending press (2) with male bending mould (4) and female bending mould (5) installed on the press flame (3), where the male bending mould (4) and/or the female bending mould (5) can be raised and lowered, in which the heated glass sheets are bent consecutively in horizontal position in accordance with specified nominal geometry,
toughening station (6) for cooling the finish-bent glass sheets and
device (7) for onward conveyance of the cooled glass sheets,
where the transfer device (1) operates between bending press (2) and toughening station (6) and combination of the following features is realized:
a) the transfer device (1) is a shuttle transfer device whose shuttle (8) is guided on its sides facing in direction of travel on shuttle guide rails (9),
b) the shuttle guide rails (9) are supported statically on the one hand on the press frame (3) of the bending press (2) and on the other hand on the station frame (10) of the toughening station (6) as beams on two supports or as continuous beams,
c) furthermore at least the areas of the shuttle guide rails (9), which project into the press frame (3) of the bending press (2) are removable for the purpose of carrying out maintenance and/or retooling operations at the bending press (2), for which reason the shuttle guide rails (9) alternatively take the form of rigid rails and are horizontally extendable from the press frame (3) and retractable into it or incorporate a folding joint where by the areas of the shuttle guide rails (9) projecting into the press frame (3) can be folded out from the latter.
d) the shuttle (8) incorporates a shuttle frame (11) as well as a shuttle ring (12) mounted therein and the shuttle frame (11) is guided on the shuttle guide rails (9) by means of a shuttle frame mounting (13),
e) the shuttle ring (12) is adjustable in relation to the shuttle frame mounting (13) and thus in relation to the male bending mould (4),
f) the shuttle ring (12) incorporates at its edges positioning devices (14) for the accepted glass sheets.

2. Transfer device (1) in accordance with claim 1, characterized by the fact that the shuttle guide rails (9) are supported on the press frame (3) as well as on the station frame (3) so as to be vertically adjustable.

3. Transfer device (1) in accordance with one of claims 1 or 2, characterized by the fact that the shuttle frame mounting (13) is constructed of mounting crossbeams (16) movable on the shuttle guide rails (9).

4. Transfer device (1) in accordance with one of claims 1 to 3, characterized by the fact that the shuttle ring (12) is attached to the shuttle frame (11) with mounting brackets (17).

5. Transfer device (1) in accordance with one of claims 1 to 4, characterized by the fact that the shuttle frame (11) in direction of travel is attached on the one hand rigidly and on the other hand adjustably to the shuttle frame mounting (13).

6. Transfer device (1) in accordance with one of claims 1 to 5, characterized by the fact that the positioning devices (14) are automatically operated positioning clamping devices (14) which act on the cut edge faces (18) of the glass sheets (19).

7. Transfer device (1) in accordance with claim 6, characterized by the fact that the positioning clamping devices (14) incorporate rotary cylinders and clamping levers or clamping cams (20).

8. Transfer device (1) in accordance with one of claims 1 to 7, characterized by the fact that the shuttle ring (12) takes the form of a rigid component.

## Revendications

1. Dispositif de transfert (1) pour des vitres cintrées au cours de la fabrication automatique de vitres de véhicules automobiles dans une chaîne de fabrication, comprenant
un four continu pour chauffer les vitres à cintrer à la température de cintrage,
une presse à cintrer (2) avec un poinçon de cintrage (4) et une matrice de cintrage (5) montés dans le bâti de presse (3), le poinçon de cintrage (4) et/ou la matrice de cintrage (5) pouvant être levés et abaissés, les vitres chauffées étant cintrées les unes après les autres en position couchée selon une géométrie de consigne prédéfinie dans ladite presse a cintrer,
un poste de précontrainte (6) pour refroidir les vitres cintrées, et
un dispositif (7) pour évacuer les vitres refroidies,
le dispositif de transfert (1) fonctionnant entre la presse à cintrer (2) et le poste de précontrainte (6), et la combinaison des caractéristiques suivantes étant réalisée :
a) le dispositif de transfert (1) est un dispositif de transfert à navette dont la navette (8) est guidée sur des rails de guidage de navette (9) sur ses côtés tournés dans la direction de déplacement,
b) les rails de guidage de navette (9) sont montés de manière statique, d'une part, sur le bâti (3) de la presse à cintrer (2), d'autre part sur le bâti (10) du poste de précontrainte (6), sous forme de poutres sur deux appuis ou sous forme de supports continus,
c) de plus, au moins les zones des rails de guidage de navette (9) qui pénètrent dans le bâti (3) de la presse à cintrer (2) peuvent être déposées pour procéder à des travaux d'entretien et/ou de conversion sur la presse à cintrer (2), à cet effet les rails de guidage de navette (9) pouvant aussi être réalisés sous la forme de rails rigides et être sortis horizontalement du bâti de presse (3) et y être rentrés ou comporter une articulation rabattable, les zones des rails de guidage de navette (9) pénétrant dans le bâti de presse (3) pouvant en sortir en étant rabattues,
d) la navette (8) comporte un châssis de navette (11) ainsi que, logé à l'intérieur, un berceau de navette (12), et le châssis de navette (11) est guidé sur les rails de guidage de navette (9) par l'intermédiaire d'un réceptacle de châssis de navette (13) apte à se déplacer sur les rails de guidage de navette (9),
e) le berceau de navette (12) peut être ajusté par rapport au réceptacle de châssis de navette (13) et donc au poinçon de cintrage (4),
f) sur ses bords, le berceau de navette (12) comporte des dispositifs de positionnement (14) pour les vitres chargées.

2. Dispositif de transfert (1) selon la revendication 1, caractérisé en ce que les rails de guidage de navette (9) sont montés sur le bâti de presse (3) comme sur le bâti de poste (10) avec la possibilité d'être réglés en hauteur.

3. Dispositif de transfert (1) selon la revendication 1 ou 2, caractérisé en ce que le réceptacle de châssis de navette (13) est constitué de barreaux récepteurs (16) aptes à se déplacer sur les rails de guidage de navette (9).

4. Dispositif de transfert (1) selon l'une des revendications 1 à 3, caractérisé en ce que le berceau de navette (12) est relié au châssis de navette (11) par des pattes d'appui (17).

5. Dispositif de transfert (1) selon l'une des revendications 1 à 4, caractérisé en ce que, dans la direction de déplacement, le châssis de navette (11) est relié au réceptacle de châssis de navette (13), d'une part, sans possibilité de déplacement et, d'autre part, avec possibilité d'ajustement.

6. Dispositif de transfert (1) selon l'une des revendications 1 à 5, caractérisé en ce que les dispositifs de positionnement (14) sont des dispositifs de positionnement par serrage à actionnement automatique (14) qui agissent sur le bord des chants (18) des vitres (19).

7. Dispositif de transfert (1) selon la revendication 6, caractérisé en ce que les dispositifs de positionnement par serrage (14) comportent des cylindres tournants et des leviers de serrage ou des excentriques de serrage (20).

8. Dispositif de transfert (1) selon l'une des revendications 1 à 7, caractérisé en ce que le berceau de navette (12) est conçu sous la forme d'un élément structurel rigide.
